# FASCICULE DE BREVET EUROPEEN

(11) **EP 3 791 099 B1**
(45) Date de publication et mention de la délivrance du brevet: **28.12.2022**
(21) Numéro de dépôt: 19722608.7
(22) Date de dépôt: 07.05.2019
(51) Int. Cl.: C04B 28/08, C04B 111/56, F16L 9/02, C04B 28/04, F16L 9/08

(54) **ELÉMENT DE CANALISATION OU DE RÉSERVOIR D'EAU POTABLE AVEC REVÊTEMENT INTERNE CIMENTAIRE**
TRINKWASSERROHRLEITUNG ODER BEHÄLTERELEMENT MIT ZEMENTARTIGER INNENAUSKLEIDUNG
DRINKING WATER PIPE OR RESERVOIR ELEMENT WITH CEMENTITIOUS INNER LINING

(30) Priorité: 07.05.2018 FR 1853916
(43) Date de publication de la demande: 17.03.2021
(73) Titulaire: Saint-Gobain Pam Canalisation, 54700 Pont-à-Mousson (FR)
(72) Inventeur: GUERANDEL, Cyril, 92110 CLICHY (FR); FRANCOIS-BRAZIER, Joël, 54700 PONT-A-MOUSSON (FR)
(74) Mandataire: Lavoix
(86) Numéro de dépôt international: PCT/EP2019/061634
(87) Numéro de publication internationale: WO 2019/215121

(56) Documents cités:
- WO-A2-2007/107763
- US-A- 5 735 947
- US-A1- 2005 160 946
- US-A1- 2011 283 516

## Description

La présente invention concerne un élément de canalisation ou de réservoir revêtu pour transporter ou stocker de l'eau potable, l'élément comprenant un élément de canalisation ou de réservoir brut en fonte ductile, en acier ou en béton, et un revêtement intérieur situé sur une paroi intérieure de l'élément de canalisation ou de réservoir brut, le revêtement intérieur étant susceptible d'être obtenu par application sur la paroi intérieure d'un mortier comportant un liant.

Ces éléments forment des canalisations ou des réservoirs destinés à l'adduction, à la distribution ou au stockage d'eau potable.

Les matériaux cimentaires sont susceptibles d'être dégradés lors d'un contact prolongé avec de l'eau. Ce phénomène s'effectue par dissolution de certains éléments de la matrice cimentaire, enrichissant ainsi en minéraux le liquide en contact avec le matériau. Ce processus de dissolution réduit la durabilité du matériau, car il épuise une partie de la matrice cimentaire de ses éléments constitutifs et principalement de son calcium. Ceci conduit à l'apparition d'une couche de dégradation dont l'épaisseur dépend à la fois du type de composition cimentaire et du temps d'exposition au liquide.

De manière à réduire ce phénomène de dégradation, la demanderesse utilise un ciment au laitier, dit CEM III/B selon la norme NF EN 197-1, dans sa version d'avril 2012. Ce ciment est défini comme comprenant en masse entre 20% et 34% de clinker, 66% à 80% de laitier de haut fourneau, et 0% à 5% d'adjuvant(s). Un tel revêtement possède d'excellentes propriétés de durabilité et permet de réduire l'épaisseur dégradée comparativement à un ciment Portland dit CEM I.

Toutefois, ce revêtement relargue parfois de l'aluminium, en quantité non négligeable dans le liquide en contact avec lui.

L'aluminium est un élément présent naturellement dans l'environnement, dans les sols et les eaux, y compris celles destinées à la consommation humaine. Néanmoins, en raison de sa toxicité potentielle, il est souhaitable de réduire l'exposition de l'homme à l'aluminium.

Le document WO 2007/107763 décrit un puits de forage comprenant une composition de ciment située entre une canalisation et les parois du puits, donc à l'extérieur de la canalisation.

Ainsi, un but de l'invention est de fournir un élément de canalisation ou de réservoir revêtu d'un matériau cimentaire relarguant moins d'aluminium dans l'eau, tout en conservant de bonnes propriétés mécaniques et de durabilité.

A cet effet, l'invention concerne un élément de canalisation ou de réservoir revêtu selon la revendication 1.

Selon des modes particuliers de réalisation, l'élément de canalisation ou de réservoir revêtu comprend l'une ou plusieurs des caractéristiques correspondant aux revendications 2 à 11, prise(s) isolément ou selon toutes les combinaisons techniquement possibles.

Par « filler » (de l'anglais *to fill,* qui signifie *remplir*), on entend par exemple des fines, ou des fines d'addition, c'est-à-dire un granulat fin.

L'invention concerne également une canalisation ou un réservoir comprenant des éléments de canalisation ou de réservoir revêtus tels que décrits ci-dessus, la canalisation ou le réservoir étant par exemple destinée à l'adduction, à la distribution ou au stockage d'eau potable.

L'invention sera mieux comprise à la lecture de la description qui va suivre, donnée uniquement à titre d'exemple et faite en se référant aux dessins annexés, sur lesquels :
- la figure 1 est une vue en coupe transversale d'un élément de canalisation revêtu selon l'invention pouvant, le cas échéant, servir à former un réservoir,
- la figure 2 est un graphique présentant les résultats d'essais de lixiviation d'aluminium sur des échantillons monolithiques de pâtes de ciment durci réalisés selon la norme EN 7345, et comparant deux formulations selon l'invention à une formulation de référence,
- les figures 3 à 5 sont également des graphiques présentant des résultats d'essais de migration de l'aluminium réalisés selon la norme EN 14944-3 sur coupes de tuyau, respectivement pour un revêtement de référence et deux revêtements selon l'invention.

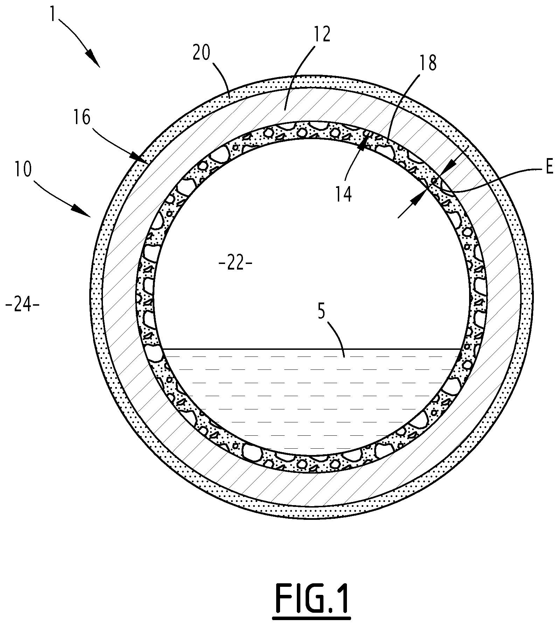

En référence à la figure 1, on décrit une canalisation 1, avantageusement enterrée, adaptée pour transporter ou stocker de l'eau potable 5. La canalisation 1 comprend un élément de canalisation revêtu 10, et d'autres éléments de canalisation revêtus non représentés.

L'élément de canalisation revêtu 10 comprend un élément de canalisation brut 12 en fonte ductile, en acier ou en béton, définissant une paroi intérieure 14 et une paroi extérieure 16, un revêtement intérieur 18 situé sur la paroi intérieure, et optionnellement un revêtement extérieur 20 situé sur la paroi extérieure. L'élément de canalisation revêtu 10 définit un espace intérieur 22 dans lequel circule le liquide 5 au contact du revêtement intérieur 18.

L'élément de canalisation brut 12 est par exemple un tuyau, un embranchement ou forme un réservoir.

Le revêtement extérieur 20 est avantageusement adapté au contact avec un sol 24. Le revêtement extérieur 20, connu en lui-même de l'homme du métier, est avantageusement configuré pour augmenter la résistance à la corrosion de l'élément de canalisation brut 12.

Le revêtement intérieur 18 tapisse avantageusement toute la paroi intérieure 14.

Dans l'exemple représenté, le revêtement intérieur 18 est obtenu par application sur la paroi 14 d'un mortier comportant un liant à base de ciment. L'application est avantageusement réalisée par centrifugation, mais peut aussi être faite par projection ou par enduction manuelle.

Le revêtement intérieur 18 présente avantageusement une épaisseur E par exemple comprise entre 3 mm et 30 mm.

Outre le liant, le mortier comprend des charges, de l'eau, un ou plusieurs superplastifiants, et un ou plusieurs autres adjuvants.

Selon un premier mode de réalisation, le liant comprend une première composition comportant un mélange de ciment Portland CEM I SR et de laitier de haut fourneau. Avantageusement, cette première composition est constituée de ce mélange.

Le ciment Portland CEM I SR est connu en lui-même de l'homme du métier et par exemple défini dans la norme française et européenne NF EN 197-1 d'avril 2012. Ce ciment contient, en masse, 95% à 100% de clinker, et 0% à 5% de constituants additionnels mineurs. Le ciment est dit SR 0, SR 3 ou SR 5 selon qu'il comporte respectivement 0% en masse, moins de 3%, ou moins de 5% de C3A, c'est-à-dire de l'aluminate tricalcite. Dit autrement, le ciment Portland CEM I SR est un ciment Portland CEM I dans lequel la proportion massique de C3A est inférieure ou égale à 5% en masse.

La proportion massique du ciment Portland CEM I SR dans ledit mélange de la première composition est comprise entre 5% et 64%, le reste étant du laitier.

Le ciment Portland CEM I SR utilisé est un CEM I SR5, de préférence un CEM I SR3, et de manière encore plus préférée un CEM I SR0, c'est-à-dire qu'il contient une proportion massique de C3A inférieure ou égale à 5%, de préférence inférieure ou égale à 3%, et de manière encore plus préférée égale à 0%. Le C3A peut néanmoins être présent à l'état de traces dans le ciment CEM I SR0, c'est à dire en quantité inférieure à 0,1% en masse de ciment, en principe indétectable par diffraction des rayons X.

Avantageusement, la proportion massique du ciment Portland CEM I SR dans ledit mélange de la première composition est comprise entre 20% et 64%, de préférence entre 25% et 50%, et de manière encore plus préférée entre 25% et 34%.

Avantageusement, les charges du mortier sont du sable, du gravier, ou leurs mélanges. De préférence, le sable et le gravier sont de nature siliceuse ou calcaire. Avantageusement, au moins 95% en masse des charges ont un diamètre inférieur ou égal à 8 mm. Le diamètre est par exemple mesuré selon la norme NF EN 933-1 de mai 2012, grâce à l'essai de détermination de caractéristiques géométriques des granulats - Partiel : Détermination de la granularité - Analyse granulométrique par tamisage. Avantageusement les particules sont dans un ratio massique S/L par rapport au liant compris entre 0,5 et 5, de préférence entre 1 et 4, et de manière encore plus préférée entre 1,5 et 3.

Dans le mortier, l'eau est avantageusement dans un ratio massique E/L par rapport au liant compris entre 0,2 et 1, de préférence entre 0,3 et 0,5, et de manière encore plus préférée entre 0,35 et 0,45.

Le ou les superplastifiants ont notamment pour rôle d'augmenter la fluidité du mortier à dosage en eau constant, ou de diminuer la teneur en eau à fluidité constante. Le ou les superplastifiants sont par exemple dans un ratio massique Sp/L par rapport au liant compris entre 0,0005 et 0,1, de préférence entre 0,001 et 0,05, et de manière encore plus préférée entre 0,002 et 0,03. Avantageusement, le mortier comprend un seul superplastifiant, par exemple une solution de polycarboxylate, avec un extrait sec avantageusement compris entre 10% et 50%, de préférence entre 20% et 40%, et de manière encore plus préférée entre 25% et 35%.

Avantageusement, le ou les adjuvants sont dans un ratio massique A/L par rapport au liant compris entre 0,001 et 0,05, de préférence entre 0,005 et 0,04, et de manière encore plus préférée entre 0,01 et 0,03.

Les adjuvants sont organiques ou minéraux. On citera par exemple les accélérateurs de prise (ou de durcissement), les retardateurs de prise et les modificateurs de viscosité.

Selon un deuxième mode de réalisation, le liant du mortier comprend une deuxième composition comportant un mélange de ciment CEM III/B avec de la microsilice (ou fumée de silice) ou un mélange de ciment Portland CEM I SR avec de la microsilice.

La proportion massique de ciment CEM III/B ou de ciment Portland CEM I SR dans ledit mélange de la deuxième composition est comprise entre 50% et 94%, le reste étant de la microsilice. Avantageusement, la proportion massique du ciment dans la deuxième composition est comprise entre 60% et 90%, et de préférence entre 70% et 80%.

Dans le deuxième mode de réalisation, les autres composants du mortier (eau, charges, superplastifiants et adjuvants) sont inchangés et les remarques les concernant formulées ci-dessus pour le premier mode de réalisation s'appliquent.

Le deuxième mode de réalisation est avantageusement mis en œuvre avec un ratio massique Sp/L par rapport au liant plus élevé : par exemple compris entre 0,005 et 0,1, de préférence entre 0,001 et 0,08, et de manière encore plus préférée entre 0,005 et 0,05.

Selon un troisième mode de réalisation, le liant du mortier est constitué d'un mélange de la première composition et de la deuxième composition telles que décrites ci-dessus, dans des proportions respectives arbitraires.

Avantageusement, selon ce troisième mode de réalisation, le liant comprend un mélange de ciment Portland CEM I SR, de laitier et de microsilice.

La proportion massique du ciment Portland CEM I SR dans le mélange est par exemple comprise entre 30% et 60%, celle de laitier entre 65% et 5 % et celle de microsilice entre 5% et 35%. De préférence, la proportion massique du ciment Portland CEM I SR est comprise entre 40% et 60%, celle de laitier entre 50% et 10% et celle de microsilice entre 10% et 30%. De manière encore plus préférentielle, dans ce mélange, la proportion massique du ciment Portland CEM I SR est comprise entre 50% et 60%, celle de laitier entre 30% et 10% et celle de microsilice entre 20% et 30%.

Grâce aux caractéristiques décrites ci-dessus, le revêtement intérieur 18 permet de réduire le relarguage d'aluminium dans le liquide 5.

Pour le premier mode de réalisation, sans être lié à une théorie particulière, les inventeurs pensent que réduire la formation d'ettringite (de formule Ca₆Al₂(SO₄)₃(OH)₁₂.26H₂O) en diminuant les teneurs en C3A de la fraction ciment Portland permet de réduire significativement le relargage d'aluminium, bien que cet élément soit majoritairement contenu dans le laitier (10% d'Al2O3), l'un des constituants du liant.

Pour le second mode de réalisation, sans être lié à une théorie particulière, les inventeurs pensent également que l'utilisation de microsilice en combinaison avec le ciment Portland CEM I SR ou le ciment CEM III/B permet également de limiter la formation d'ettringite et de réduire significativement le relargage d'aluminium.

L'ettringite contribue à la prise et au durcissement des ciments. Cependant, l'utilisation du procédé de centrifugation pour réaliser le revêtement intérieur 18 permet, de manière surprenante, de s'affranchir des contraintes de prise/durcissement et conduit aux performances mécaniques adéquates, notamment une résistance mécanique en compression supérieure ou égale à 50 MPa à 28 jours (selon EN 545).

De plus, grâce à la première composition, la durabilité du revêtement intérieur 18 est équivalente à ou meilleure que celle d'un revêtement standard à base de ciment CEM III/B. Le ciment CEM III/B comprend typiquement, en masse, entre 20% et 34% de clinker, 66% à 80% de laitier de haut fourneau, et 0% à 5% de constituants additionnels mineurs.

Par rapport au ciment CEM III/B, le nouveau liant selon la première composition permet de réduire les dosages en superplastifiant nécessaires pour atteindre la fluidité adéquate pour la mise en œuvre du revêtement.

Grâce à la deuxième composition, la durabilité du revêtement intérieur 18 est significativement plus élevée que celle d'un revêtement réalisé à partir d'un ciment Portland, et du même ordre de grandeur que celle d'un revêtement réalisé avec uniquement du CEM III/B sans microsilice.

### Résultats expérimentaux

### A - Essais sur des pâtes de ciment durci

Des cubes de 10 cm d'arête ont été fabriqués à partir de pâtes de ciment et curés pendant vingt-huit jours à 100% d'humidité, avant d'être exposés à un essai de lixiviation conforme à la norme EN 7345 de mars 1995, intitulée *Caractéristiques de lixiviation de matériaux de construction et de déchets de terre compacte et de pierres. Tests de lixiviation.* La norme propose une détermination de la lixiviation de composés anorganiques dans des matériaux façonnés et monolithiques au moyen d'un test de diffusion, utilisé pour les présents essais.

Les quantités massiques de matières sèches des formulations de liant testées sont présentées dans le tableau 1 suivant.

**Tableau 1 : Quantités massiques de matières sèches pour les formulations de liants testées selon la norme EN 7345.**

| | CEM III/B | CEM I SR0 | Laitier | Microsilice |
|---|---|---|---|---|
| **Référence** | 100% | - | - | - |
| **Exemple 1** | - | 30% | 70% | - |
| **Exemple 2** | - | 75% | - | 25% |

Dans la formulation dite de référence, le liant utilisé est un ciment CEM III/B comprenant 9,7% d'alumine en masse. Dans toutes les formulations testées, le rapport eau/liant est égal à 0,31.

L'exemple 1 est conforme à la première composition décrite ci-dessus, avec un liant comportant en masse 30% de ciment Portland CEM I SR0 et 70% de laitier de haut fourneau. Un tel liant comprend 8,7% en masse d'alumine.

L'exemple 2 est conforme à la deuxième composition, avec un liant comportant, en masse, 75% de ciment Portland CEM I SR0 et 25% de microsilice. Il s'agit de fumée de silice densifiée de la société Elkem. Un tel liant comprend 2,7% en masse d'alumine. Dans l'exemple 2, la pâte comprend aussi 0,45% en masse d'un superplastifiant Optima 220 de la société Chryso.

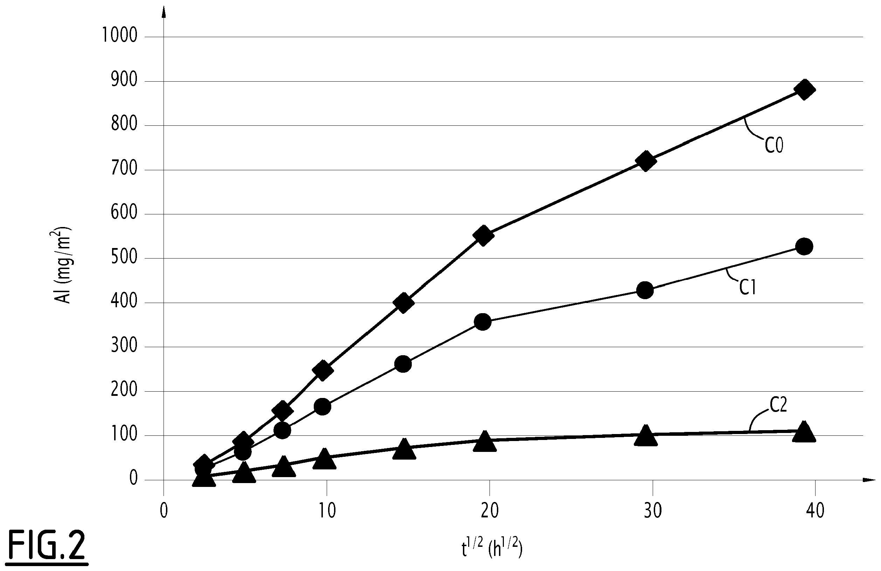

Les résultats des essais de lixiviation d'aluminium sont présentés sur la figure 2. Ils fournissent les quantités cumulées d'aluminium lixivié, en milligramme/m² (dans la norme EN 7345 les teneurs lixiviées sont exprimées par unité de surface, plus précisément par mètre carré de pâte de ciment durci, en fonction de la racine carrée du temps exprimé en heures). La courbe C0 concerne le cube de référence, tandis que les courbes C1 et C2 concernent respectivement l'exemple 1 et l'exemple 2.

Le tableau 2 suivant récapitule la réduction de la lixiviation d'aluminium obtenue pour les nouvelles formulations (exemples 1 et 2) comparativement à la formule de référence à base de ciment CEM III/B. De plus, la durabilité des liants a été exprimée comme la capacité à réduire la lixiviation du calcium par rapport à un ciment Portland CEM I ordinaire (c'est-à-dire comportant plus de 5% en masse de C3A).

**Tableau 2 : Réduction de la lixiviation de l'aluminium des nouvelles formulations et réduction de la lixiviation du calcium.**

| | **CEM III/B** | **Exemple 1** | **Exemple 2** |
|---|---|---|---|
| Réduction de la lixiviation de l'aluminium (par rapport au CEM III/B) | 0% | 40% | 87,5% |
| Réduction de la lixiviation du calcium (par rapport au CEM I) | 57% | 68% | 45% |

Comme on peut le constater, les exemples 1 et 2 ont permis de réduire la lixiviation de l'aluminium de respectivement 40% et 87,5%, au bout de 1536 heures ou 64 jours.

En outre, la lixiviation du calcium a été réduite respectivement de 68% et 45% par rapport à un ciment Portland CEM I ordinaire. Ceci démontre que les cubes de liant durci obtenus à partir de la première composition et de la deuxième composition sont plus durables que les liants obtenus à partir de ciment Portland ordinaire.

### B - Essais sur des tuyaux prototypes

Des revêtements à base des différentes formulations de liants ont été déposés dans des tuyaux de fonte par un procédé de centrifugation connu en lui-même. Les formulations des revêtements sont présentées dans le tableau 3 suivant.

**Tableau 3 : Quantités massiques de matières pour les formulations de mortiers utilisées pour réaliser des tuyaux prototypes.**

| | CEM III/B | CEM I SR0 | Laitier | Microsilice | Sable 0-2 mm | Superplastifiant |
|---|---|---|---|---|---|---|
| **Référence** | 37,7 kg | | | | 62,3 kg | |
| **Exemple 1** | | 11,3 kg | 26,4 kg | | 62,3 kg | |
| **Exemple 2** | | 28,2 kg | | 9,36 kg | 62,07 kg | 0,37 kg |

Comme on peut le constater, le revêtement de référence contient 37,7% de ciment CEM III/B et 62,3% de sable d'une granulométrie comprise entre 0 et 2 mm. Le revêtement avant solidification comprend également de l'eau dans un ratio eau/liant de 0,46.

L'exemple 1 est un mortier selon le premier mode de réalisation, comprenant, en masse, 11,3% de ciment Portland CEM I SR0, 26,4% de laitier de haut fourneau, et 62,3% de sable de granulométrie 0 à 2 mm. Le ratio eau/liant est de 0,50.

L'exemple 2 est un mortier selon le deuxième mode de réalisation, comprenant, en masse, 28,3% de ciment Portland CEM I SR0, 9,4% de microsilice 940D, et 62,3% de sable de granulométrie 0 à 2 mm. L'exemple 2 comprend en outre 1% de superplastifiant Optima 220 Chryso par rapport à la masse de liant. Le ratio eau/liant est de 0,46 dans cet exemple.

Les propriétés mécaniques des mortiers à l'état frais ou durci ont été déterminées respectivement avant et après centrifugation. Les résultats sont présentés dans le tableau 4 ci-après.

**Tableau 4 : Propriétés physiques des formulations de mortiers à l'état frais et durci.**

| Unité | Viscosité (V-Funnel) seconde | Fluidité mm | Compacité | Rc à 28 jours MPa | Fissure |
|---|---|---|---|---|---|
| **Référence** | <3 | > 150 | 10-11 | 50 | 0 |
| **Exemple 1** | 1,35 | 170 | 11 | 65 | 0 |
| **Exemple 2** | 1,9 | 160 | 10,5 | 74 | 0 |

La viscosité et la fluidité du mortier, ont été déterminées respectivement par la mesure du temps d'écoulement au V-Funnel, tel que défini par la norme EN 12350-9 (novembre 2010) et par la mesure de l'étalement selon la norme NF EN 12706 (mai 2000). Les résultats montrent que les mortiers selon les premier et deuxième modes de réalisation permettent de satisfaire aux critères d'écoulements requis pour la réalisation de revêtements de tuyaux.

Les mesures de compacité à l'état frais après centrifugation ont été réalisées conformément à une méthode de résistance à l'enfoncement avec un pénétromètre de poche. Les résultats montrent que les mortiers selon le premier et deuxième mode de réalisation permettent d'obtenir des revêtements dont la compacité est comparable au revêtement de référence.

Les performances mécaniques ont été déterminées conformément à la norme NF EN 196-1 (Septembre 2016). Il apparaît qu'à 28 jours la résistance mécanique à la compression (Rc) des revêtements selon le premier et deuxième mode de réalisation est significativement supérieure aux 50 MPa recommandés pour les revêtements de tuyaux conformément à la norme NF EN 545 (décembre 2010).

Les propriétés de résistance à la fissuration ont été déterminées en étudiant le retrait, premièrement, d'échantillons de mortier en forme d'anneau moulés autour d'un noyau métallique et deuxièmement, de revêtements de sections de tuyaux d'un mètre de long. A l'issue des 28 jours de cure humide, les résultats montrent que les revêtements selon le premier et le deuxième mode de réalisation ne présentent aucune fissure pour les deux types d'échantillons.

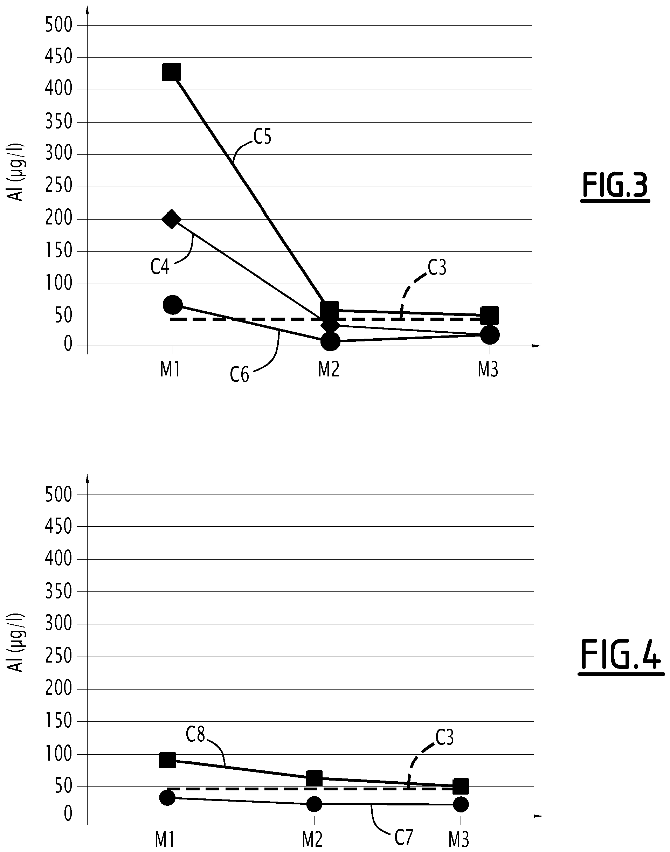

Après vingt-huit jours, les tuyaux prototypes ont été testés en lixiviation selon la norme EN 14944-3 (Mars 2008) « influence des produits à base de ciment sur l'eau destinée à la consommation humaine ». Le protocole utilisé correspond aux tests de tuyaux de diamètre nominal 80 mm (DN 80). La limite d'aluminium lixivié est fonction du diamètre nominal du tuyau. Dans le cas de tuyaux de diamètre nominal 80 mm, la limite est 45 µg/l. Les résultats des essais de migration d'aluminium pour les trois formulations de revêtement sont présentés sur les figures 3 à 5.

Sur les trois figures 3 à 5, on a représenté les quantités d'aluminium lixivié en µg/l pour les trois tests de migration 1, 2 et 3 préconisés par la norme EN 14944-3. Ils sont notés M1, M2, M3 en abscisse. Sur chacune de ces figures, la courbe C3 représente la limite réglementaire de 45 µg/l.

Sur la figure 3, les courbes C4, C5 et C6 correspondent à trois revêtements de référence déposés dans trois tuyaux et dont la composition est précisée dans le tableau 3.

Sur la figure 4, les courbes C7 et C8 correspondent à deux revêtements selon l'exemple 1 du tableau 3 déposés dans deux tuyaux.

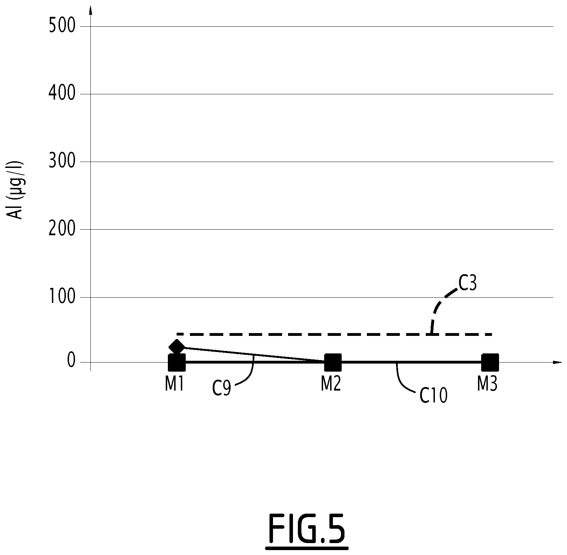

Sur la figure 5, les courbes C9 et C10 correspondent à deux revêtements selon l'exemple 2 du tableau 3 déposés dans deux tuyaux.

Sur le tableau 5 suivant, on a représenté la concentration moyenne d'aluminium relargué au cours des migrations. Les moyennes exprimées dans le tableau 5 ont été effectuées en considérant la totalité des tuyaux testés pour chaque type de revêtement et en moyennant les résultats obtenus pour les trois migrations.

**Tableau 5 : Concentration moyenne d'aluminium lixivié selon la norme EN-14944 et réduction de la lixiviation de l'aluminium obtenu avec les nouvelles formulations.**

| | **Référence** | **Exemple 1** | **Exemple 2** |
|---|---|---|---|
| Concentration moyenne d'aluminium (µg/l) | 102 | 45 | < 12 |
| Réduction de la lixiviation de l'aluminium | 0% | 56% | > 88% |

Comme on peut le constater, la concentration moyenne en aluminium relargué est de 102 µg/l pour les revêtements de référence, 45 µg/l pour les revêtements selon le premier exemple, et de moins de 12 µg/l pour les revêtements suivant le deuxième exemple. Ainsi, on constate que les revêtements selon le premier exemple réduisent la lixiviation de l'aluminium de 56% par rapport à la référence, tandis que ceux selon le deuxième exemple réduisent de plus de 88% cette lixiviation.

Les deux compositions cimentaires (premier et deuxième exemples) décrites ci-dessus sont adéquates pour la fabrication de revêtements intérieurs d'éléments de tuyauterie ou de réservoir destinés à la distribution, à l'adduction et au stockage d'eau potable. Ces revêtements permettent de diminuer significativement la lixiviation de l'aluminium, et donc par exemple de satisfaire à de futurs critères réglementaires sur la migration de cet élément dans l'eau potable. En plus de leurs bonnes propriétés environnementales, ces nouveaux revêtements présentent un niveau de durabilité très supérieur à celui des revêtements réalisés à partir de ciment Portland classique.

## Revendications

1. Elément de canalisation ou de réservoir revêtu (10) pour transporter ou stocker de l'eau potable, l'élément de canalisation ou de réservoir revêtu (10) comprenant :
- un élément de canalisation ou de réservoir brut (12) en fonte ductile, en acier ou en béton, et
- un revêtement intérieur (18) situé sur une paroi intérieure (14) de l'élément de canalisation ou de réservoir brut (12), le revêtement intérieur (18) étant susceptible d'être obtenu par application sur la paroi intérieure (14) d'un mortier comportant un liant, **caractérisé en ce que** le liant comprend l'un parmi :
- une première composition comportant un mélange de ciment Portland CEM I SR et de laitier de haut-fourneau, la proportion massique du ciment Portland CEM I SR dans ledit mélange étant comprise entre 5% et 64%,
- une deuxième composition comportant un mélange de ciment CEM III/B et de microsilice, ou un mélange de ciment Portland CEM I SR et de microsilice, la proportion massique de ciment CEM III/B ou de ciment Portland CEM I SR dans ledit mélange étant comprise entre 50% et 94%, et
- les mélanges de la première composition et de la deuxième composition.

2. Elément de canalisation ou de réservoir revêtu (10) selon la revendication 1, dans lequel le liant comprend un mélange de ciment Portland CEM I SR, de laitier et de microsilice,
la proportion massique du ciment Portland CEM I SR dans ledit mélange étant comprise entre 30% et 60%, de préférence entre 40% et 60%, et de manière encore plus préférée entre 50% et 60%,
la proportion massique du laitier dans ledit mélange étant comprise entre 65 % et 5%, de préférence entre 50% et 10%, et de manière encore plus préférée entre 30% et 10%, et
la proportion massique de microsilice dans ledit mélange étant comprise entre 5% et 35%, de préférence entre 10% et 30%, et de manière encore plus préférée entre 20% et 30%.

3. Elément de canalisation ou de réservoir revêtu (10) selon la revendication 1 ou 2, dans lequel le ciment Portland CEM I SR de la première composition ou de la deuxième composition ou de leurs mélanges est un CEM I SR5, de préférence un CEM I SR3, et de manière encore plus préférée un CEM I SR0.

4. Elément de canalisation ou de réservoir revêtu (10) selon l'une quelconque des revendications 1 à 3, dans lequel la proportion massique du ciment Portland CEM I SR dans ledit mélange de la première composition est comprise entre 20% et 64%, de préférence entre 25% et 50%, et de manière encore plus préférée entre 25% et 34%.

5. Elément de canalisation ou de réservoir revêtu (10) selon l'une quelconque des revendications 1 à 4, dans lequel la proportion massique du ciment CEM III/B ou du ciment Portland CEM I SR dans ledit mélange de la deuxième composition est comprise entre 60% et 90%, de préférence entre 70% et 80%.

6. Elément de canalisation ou de réservoir revêtu (10) selon l'une quelconque des revendications 1 à 5, dans lequel le mortier comprend en outre des charges, dans un ratio massique (S/L) par rapport au liant compris entre 0,5 et 5, de préférence entre 1 et 4, et de manière encore plus préférée entre 1,5 et 3.

7. Elément de canalisation ou de réservoir revêtu (10) selon la revendication 6, dans lequel les charges sont du filler, du sable et/ou du gravier, de préférence de nature siliceuse ou calcaire, au moins 95% en masse des charges ayant un diamètre inférieur ou égal à 8 mm.

8. Elément de canalisation ou de réservoir revêtu (10) selon l'une quelconque des revendications 1 à 7, dans lequel le mortier comprend en outre de l'eau, dans un ratio massique (E/L) de l'eau par rapport au liant compris entre 0,2 et 1, de préférence entre 0,3 et 0,5, et de manière encore plus préférée entre 0,35 et 0,45.

9. Elément de canalisation ou de réservoir revêtu (10) selon l'une quelconque des revendications 1 à 8, dans lequel :
- le liant comprend la première composition, et le mortier comprend en outre un ou plusieurs superplastifiant(s), dans un ratio massique (Sp/L) de superplastifiant(s) par rapport au liant compris entre 0,0005 et 0,1, de préférence entre 0,001 et 0,05, et de manière encore plus préférée entre 0,002 et 0,03, ou
- le liant comprend la deuxième composition, et le mortier comprend en outre un ou plusieurs superplastifiant(s), dans un ratio massique (Sp/L) de superplastifiant(s) par rapport au liant compris entre 0,005 et 0,1, de préférence entre 0,001 et 0,08, et de manière encore plus préférée entre 0,005 et 0,05.

10. Elément de canalisation ou de réservoir revêtu (10) selon la revendication 9, dans lequel ledit un ou plusieurs superplastifiant(s) comprend une solution de polycarboxylate avec un extrait sec de 10% à 50%, de préférence de 20% à 40% et de manière encore plus préférée de 25% à 35%.

11. Elément de canalisation ou de réservoir revêtu (10) selon l'une quelconque des revendications 1 à 10, dans lequel le mortier comprend en outre un ou plusieurs adjuvant(s), dans un ratio massique (A/L) d'adjuvant(s) par rapport au liant compris entre 0,001 et 0,05, de préférence entre 0,005 et 0,04, et de manière encore plus préférée entre 0,01 et 0,03.

## Patentansprüche

1. Beschichtetes Rohrleitungs- oder Behälterelement (10) zum Transportieren oder Speichern von Trinkwasser, das beschichtete Rohrleitungs- oder Behälterelement (10) umfassend:
- ein rohes Rohrleitungs- oder Behälterelement (12) aus duktilem Gusseisen, Stahl oder Beton, und
- eine Innenauskleidung (18), die sich auf einer Innenwand (14) des rohen Rohrleitungs- oder Behälterelement (12) befindet, wobei die Innenauskleidung (18) durch Aufbringen eines Mörtels umfassend ein Bindemittel auf die Innenwand (14) erlangt werden kann, **dadurch gekennzeichnet, dass** das Bindemittel eines von Folgenden umfasst:
- eine erste Zusammensetzung, umfassend ein Gemisch aus Portlandzement CEM I SR und Hochofenschlacke umfasst, wobei der Massenanteil des Portlandzements CEM I SR in dem genannten Gemisch zwischen 5 % und 64 % ist,
- eine zweite Zusammensetzung, umfassend ein Gemisch aus CEM III/B-Zement und Mikrosilica oder ein Gemisch aus CEM I SR-Portlandzement und Mikrosilica, wobei der Massenanteil von CEM III/B-Zement oder CEM I SR-Portlandzement in diesem Gemisch zwischen 50 % und 94 % ist, und
- Gemische aus der ersten Zusammensetzung und der zweiten Zusammensetzung.

2. Beschichtetes Rohrleitungs- oder Behälterelement (10) nach Anspruch 1, wobei das Bindemittel ein Gemisch aus Portlandzement CEM I SR, Schlacke und Mikrosilica umfasst,
wobei der Massenanteil des Portlandzements CEM I SR in dem Gemisch zwischen 30 % und 60 %, vorzugsweise zwischen 40 % und 60 % und noch bevorzugter zwischen 50 % und 60 % ist,
wobei der Massenanteil der Schlacke in dem Gemisch zwischen 65 % und 5 %, vorzugsweise zwischen 50 % und 10 % und noch bevorzugter zwischen 30 % und 10 % ist, und
wobei der Massenanteil an Mikrosilica in dem Gemisch zwischen 5 % und 35 %, vorzugsweise zwischen 10 % und 30 % und noch bevorzugter zwischen 20 % und 30 % ist.

3. Beschichtetes Rohrleitungs- oder Behälterelement (10) nach Anspruch 1 oder 2, wobei der Portlandzement CEM I SR der ersten Zusammensetzung oder der zweiten Zusammensetzung oder deren Gemische ein CEM I SR5, vorzugsweise ein CEM I SR3, und noch bevorzugter ein CEM I SR0, ist.

4. Beschichtetes Rohrleitungs- oder Behälterelement (10) nach einem der Ansprüche 1 bis 3, wobei der Massenanteil des Portlandzements CEM I SR in dem Gemisch der ersten Zusammensetzung zwischen 20 % und 64 %, vorzugsweise zwischen 25 % und 50 % und noch bevorzugter zwischen 25 % und 34 % ist.

5. Beschichtetes Rohrleitungs- oder Behälterelement (10) nach einem der Ansprüche 1 bis 4, wobei der Massenanteil des Zements CEM III/B oder des Portlandzements CEM I SR in dem Gemisch der zweiten Zusammensetzung zwischen 60 % und 90 %, vorzugsweise zwischen 70 % und 80 %, ist.

6. Beschichtetes Rohrleitungs- oder Behälterelement (10) nach einem der Ansprüche 1 bis 5, wobei der Mörtel zusätzlich Zuschlagstoffe umfasst, in einem Massenverhältnis (S/L) in Bezug auf das Bindemittel zwischen 0,5 und 5, vorzugsweise zwischen 1 und 4, und noch bevorzugter zwischen 1,5 und 3.

7. Beschichtetes Rohrleitungs- oder Behälterelement (10) nach Anspruch 6, wobei die Zuschlagstoffe Füllstoff, Sand und/oder Kies sind, vorzugsweise silikatischer oder kalkhaltiger Natur, wobei mindestens 95 Massenprozent der Zuschlagstoffe einen Durchmesser von 8 mm oder weniger aufweisen.

8. Beschichtetes Rohrleitungs- oder Behälterelement (10) nach einem der Ansprüche 1 bis 7, wobei der Mörtel zusätzlich Wasser in einem Massenverhältnis (W/L) von Wasser in Bezug auf Bindemittel zwischen 0,2 und 1, vorzugsweise zwischen 0,3 und 0,5 und noch bevorzugter zwischen 0,35 und 0,45, umfasst.

9. Beschichtetes Rohrleitungs- oder Behälterelement (10) nach einem der Ansprüche 1 bis 8, wobei:
- das Bindemittel die erste Zusammensetzung umfasst und der Mörtel ferner ein oder mehrere Fließmittel in einem Massenverhältnis (Sp/L) von Fließmittel in Bezug auf Bindemittel zwischen 0,0005 und 0,1, vorzugsweise zwischen 0,001 und 0,05, und noch bevorzugter zwischen 0,002 und 0,03 umfasst, oder
- das Bindemittel die zweite Zusammensetzung umfasst und der Mörtel ferner ein oder mehrere Fließmittel in einem Massenverhältnis (Sp/L) von Fließmittel in Bezug auf Bindemittel zwischen 0,005 und 0,1, vorzugsweise zwischen 0,001 und 0,08, und noch bevorzugter zwischen 0,005 und 0,05 umfasst.

10. Beschichtetes Rohrleitungs- oder Behälterelement (10) nach Anspruch 9, wobei der eine oder die mehreren Fließmittel eine Polycarboxylatlösung mit einem Feststoffgehalt von 10 % bis 50 %, vorzugsweise von 20 % bis 40 % und noch bevorzugter von 25 % bis 35 % umfasst.

11. Beschichtetes Rohrleitungs- oder Behälterelement (10) nach einem der Ansprüche 1 bis 10, wobei der Mörtel ferner ein oder mehrere Hilfsmittel in einem Massenverhältnis (A/L) von Zusatzmittel in Bezug auf Bindemittel zwischen 0,001 und 0,05, vorzugsweise zwischen 0,005 und 0,04, und noch bevorzugter zwischen 0,01 und 0,03 umfasst.

## Claims

1. A lined pipe or reservoir element (10) for transporting or storing drinking water, the pipe or reservoir element (10) comprising:
- a blank pipe or reservoir element (12) made of ductile cast iron, steel or concrete, and
- an inner lining (18) located on an inner wall (14) of the blank pipe or reservoir element (12), the inner lining (18) being capable of being obtained by applying a mortar comprising a binder to the inner wall (14), **characterized in that** the binder comprises one from among:
- a first composition comprising a mixture of CEM I SR Portland cement and blast-furnace slag, the weight portion of the CEM I SR Portland cement in said mixture being between 5% and 64%,
- a second composition comprising a mixture of CEM III/B cement and microsilica, or a mixture of CEM I SR Portland cement and microsilica, the weight proportion of CEM III/B cement or of CEM I SR Portland cement in said mixture being between 50% and 94%, and
- the mixtures of the first composition and the second composition.

2. The lined pipe or reservoir element (10) according to claim 1, wherein the binder comprises a mixture of CEM I SR Portland cement, slag and microsilica,
the weight proportion of the CEM I SR Portland cement in said mixture being inclusively between 30% and 60%, preferably between 40% and 60%, and still more preferably between 50% and 60%,
the weight proportion of the slag in said mixture being inclusively between 65% and 5%, preferably between 50% and 10%, and still more preferably between 30% and 10%, and
the weight proportion of microsilica in said mixture being inclusively between 5% and 35%, preferably between 10% and 30%, and still more preferably between 20% and 30%.

3. The lined pipe or reservoir element (10) according to claim 1 or 2, wherein the CEM I SR Portland cement of the first composition or of the second composition or of the mixtures thereof is a CEM I SR5, preferably a CEM I SR3, and still more preferably a CEM I SR0.

4. The lined pipe or reservoir element (10) according to any one of claims 1 to 3, wherein the weight proportion of the CEM I SR Portland cement in said mixture of the first composition is inclusively between 20% and 64%, preferably between 25% and 50%, and still more preferably between 25% and 34%.

5. The lined pipe or reservoir element (10) according to any one of claims 1 to 4, wherein the weight proportion of the CEM III/B cement or of the CEM I SR Portland cement in said mixture of the second composition is inclusively between 60% and 90%, preferably between 70% and 80%.

6. The lined pipe or reservoir element (10) according to any one of claims 1 to 5, wherein the mortar further comprises filler materials, in a weight ratio (S/L) relative to the binder inclusively between 0.5 and 5, preferably between 1 and 4, still more preferably between 1.5 and 3.

7. The lined pipe or reservoir element (10) according to claim 6, wherein the filler materials are filler, sand and/or gravel, preferably siliceous or calcareous, at least 95 wt% of the filler materials having a diameter of less than or equal to 8 mm.

8. The lined pipe or reservoir element (10) according to any one of claims 1 to 7, wherein the mortar further comprises water, in a weight ratio (E/L) of water to binder inclusively between 0.2 and 1, preferably between 0.3 and 0.5, and still more preferably between 0.35 and 0.45.

9. The lined pipe or reservoir element (10) according to any one of claims 1 to 8, wherein:
- the binder comprises the first composition, and the mortar further comprises one or several superplasticizer(s), in a weight ratio (Sp/L) of superplasticizer(s) to binder inclusively between 0.0005 and 0.1, preferably between 0.001 and 0.05, still more preferably between 0.002 and 0.03, or
- the binder comprises the second composition, and the mortar further comprises one or several superplasticizer(s), in a weight ratio (Sp/L) of superplasticizer(s) to binder inclusively between 0.005 and 0.1, preferably between 0.001 and 0.08, still more preferably between 0.005 and 0.05.

10. The lined pipe or reservoir element (10) according to claim 9, wherein said one or several superplasticizer(s) comprises a solution of polycarboxylate with a dry extract of 10% to 50%, preferably from 20% to 40% and still more preferably from 25% to 35%.

11. The lined pipe or reservoir element (10) according to any one of claims 1 to 10, wherein the mortar further comprises one or several additives, in a weight ratio (A/L) of additive(s) to binder inclusively between 0.001 and 0.05, preferably between 0.005 and 0.04, and still more preferably between 0.01 and 0.03.
